# DEMANDE DE BREVET EUROPEEN

(11) **EP 3 626 376 A1**
(43) Date de publication de la demande: **25.03.2020**
(21) Numéro de dépôt: 18196367.9
(22) Date de dépôt: 24.09.2018
(51) Int. Cl.: B23F 21/16, B23C 5/12, G04D 3/00

(54) **FRAISE-MERE POUR LA FABRICATION DE ROUES DENTEES HORLOGERES**

(71) Demandeur: ETA SA Manufacture Horlogère Suisse, 2540 Grenchen (CH)
(72) Inventeur: Skrapits, Agoston, 2400 Le Locle (CH)
(74) Mandataire: ICB SA

(57) **Abrégé**

L'invention concerne une fraise-mère (1) pour le taillage de roues dentées de petites dimensions, telles que les roues dentées horlogères, la fraise-mère (1) étant apte à tourner autour d'un axe de rotation par rapport à une pièce à usiner, la fraise-mère (1) comprenant une ou plusieurs rangées d'arêtes tranchantes (8), chaque rangée formant un profil de denture qui s'étend sur au moins une partie de l'épaisseur de la fraise-mère (1), ledit profil de denture étant fabriqué dans un matériau ultra-dur, ledit matériau étant choisi parmi le groupe constitué du diamant monocristallin, du diamant polycristallin (PCD) et du nitrure de bore cubique (CBN).

## Description

### Domaine technique

La présente invention se rapporte au taillage de roues dentées de petites dimensions, principalement des roues dentées horlogères, utilisées dans la production de montres.

### État de la technique

Pour la production de roues dentées de montres, on utilise un outil de taillage appelé 'fraise-mère', qui a la forme d'une pièce cylindrique entaillée de goujures longitudinales et pourvue de profils de denture de manière à former des arêtes tranchantes. Les fraises-mères utilisées actuellement pour la fabrication de roues dentées pour montres sont des pièces uniformes en matériau dur, tel que le carbure de tungstène (WC) ou le nitrure de silicium (Si₃N₄). A noter que les fraises-mères peuvent être à un ou plusieurs filets.

La durée de vie de ce type d'outil est limitée, nécessitant des interruptions fréquentes de la production pour des opérations de réaffûtage ou de remplacement des outils.

### Résumé de l'invention

La présente invention vise à fournir une fraise-mère à durée de vie augmentée par rapport aux outils décrits ci-dessus. Ce but est atteint par un outil selon l'une quelconque des revendications annexées. La fraise-mère selon l'invention est d'application pour le taillage de roues dentées de petites dimensions, telles que les roues dentées horlogères, la fraise-mère étant apte à tourner autour d'un axe de rotation, la fraise-mère comprenant une ou plusieurs rangées d'arêtes tranchantes, chaque rangée formant un profil de denture qui s'étend sur au moins une partie de l'épaisseur de la fraise-mère, et dans laquelle le profil de denture est fabriqué en un matériau ultra-dur, ledit matériau étant choisi parmi le groupe constitué du diamant monocristallin, du diamant polycristallin (PCD) et du nitrure de bore cubique (CBN).

D'autres caractéristiques et avantages de la présente invention apparaîtront dans la description suivante de modes de réalisation préférés, présentés à titre d'exemple non limitatif en référence aux dessins annexés

### Brève description des figures

La figure 1 représente une fraise-mère selon une première forme d'exécution de l'invention.
La figure 2 représente une fraise-mère selon une deuxième forme d'exécution de l'invention.
Les figures 3a-3c illustrent le procédé de fabrication ainsi que l'apparence finale d'une fraise-mère selon une troisième forme d'exécution de l'invention.
La figure 4 représente un profil de taillage ménagé dans un bloc comprenant une base et une couche ultra-dure, ledit profil étant réalisé dans la base ainsi que dans la couche.
La figure 5 représente une fraise-mère selon une quatrième forme d'exécution de l'invention.

### Description détaillée de formes d'exécution de l'invention

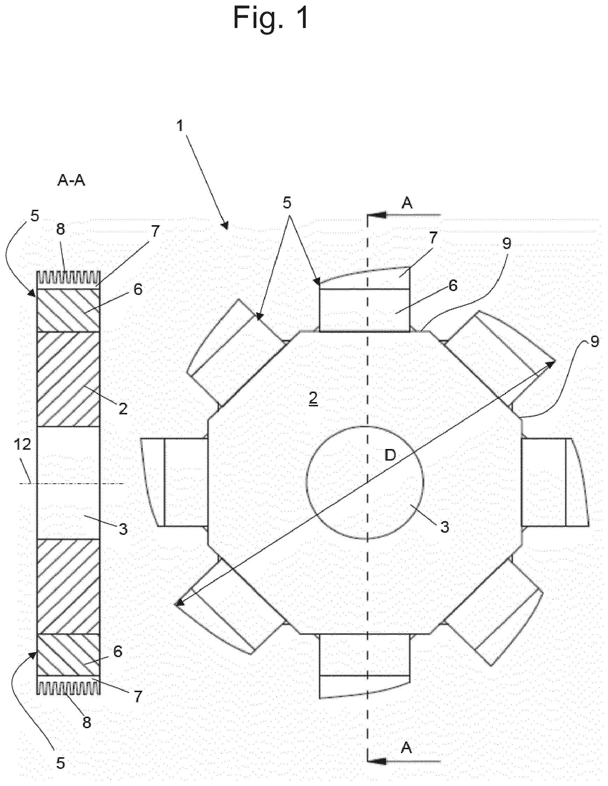

La figure 1 représente une première forme d'exécution d'une fraise-mère 1 selon l'invention. L'outil comprend un corps 2 en matériau résistant, tel que le WC. Le corps 2 a une forme cylindrique, présentant un trou central 3 ainsi qu'une surface extérieure à section polygonale, octogonale dans l'exemple illustré. L'axe central 12 du corps 2 est également l'axe de rotation autour duquel l'outil va tourner lors de sa mise en oeuvre pendant une opération de taillage. Sur les faces 9 de la surface extérieure, huit blocs 5 respectifs sont attachés de manière fixe. Chaque bloc comprend une base 6 en matériau résistant, tel que le WC, surmontée d'une portion tranchante 7 en un matériau ultra-dur. Les matériaux ultra-durs qui sont utilisables dans une fraise-mère selon cette première forme d'exécution sont le nitrure de bore cubique (CBN) et le diamant polycristallin (PCD). Les portions tranchantes 7 sont pourvues, au moins dans une partie de leur épaisseur, d'arêtes tranchantes 8 qui forment des profils de denture qui s'étendent sur la largeur des blocs 5. Dans la forme d'exécution présentée, la largeur des blocs 5 est égale à l'épaisseur du corps 2 de l'outil. La forme des arêtes 8 et du profil de denture peut correspondre aux outils du même type existant dans l'état de la technique. De préférence, un profil de denture à dépouille logarithmique est appliqué, permettant le réaffûtage de la fraise en maintenant les paramètres géométriques de l'outil. La dépouille logarithmique, qui est une caractéristique de fraises-mères connue en soi, est de préférence également appliquée dans les autres formes d'exécution de l'invention, décrites ci-après ainsi que dans des formes équivalentes.

Les dimensions d'une fraise-mère selon l'invention sont égales ou du même ordre de grandeur que celles des outils connus. Par exemple la fraise-mère représentée à la figure 1 peut avoir un diamètre extérieur D d'environ 25 mm et une épaisseur comprise entre 8 et 16 mm. La hauteur des dents 8 du profil est typiquement comprise entre 0.6 et 0.8 mm pour des roues dentées de mouvements d'horlogerie. Les blocs 5 sont réalisables par découpage d'une plaque de WC sur laquelle une couche de PCD ou CBN a été appliquée. Ce type de plaque préfabriquée est disponible sur le marché. Elle est par exemple produite par la société Worldia® qui commercialise des plaques en carbure de tungstène revêtues d'une couche de PCD de plusieurs millimètres d'épaisseur, déposée par CVD (Chemical Vapour Déposition). Les blocs 5 découpés à partir d'une telle plaque peuvent être fixés sur les faces du corps 2 en WC par brasage. Ensuite, les profils de denture sont usinés dans les portions 7 ultra-dures par une technologie connue, telle que le meulage à l'aide d'une meule au diamant, l'électroérosion au fil ou le découpage laser. On notera que le profil de denture se trouve entièrement dans la portion ultra-dure 7 pour que le contour total de la denture générée soit coupé par le matériau ultra-dur. D'autre part on notera également que la géométrie du profil de denture et sa répartition sur le pourtour de la fraise se fait selon les règles de l'art classiques à ce genre d'outil.

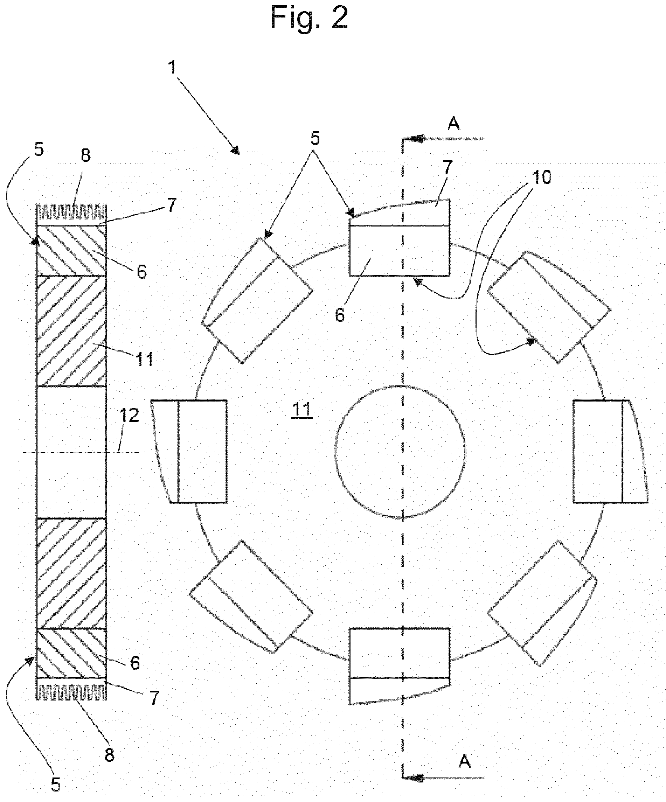

A la figure 2, une deuxième forme d'exécution d'une fraise-mère 1 selon l'invention comprenant des blocs en WC+PCD ou en WC+CBN est représentée. Les blocs 5 comprenant de nouveau une base 6 et une portion ultra-dure 7, sont maintenant montés dans une série d'encoches 10 usinées préalablement à distances régulières dans la face extérieure d'une rondelle 11 en WC par exemple, ayant un axe central 12. La rondelle 11 représente le corps de la fraise-mère selon cette forme d'exécution. La fabrication des encoches 10 est réalisable également par des technologies existantes d'usinage de matériaux durs, telles que l'électroérosion au fil ou le découpage laser. Les blocs 5 sont fixés dans les encoches 10 par brasage et ensuite les arêtes 8 des profils de denture sont usinées au moins et de préférence entièrement dans les portions ultra-dures 7, de la même manière que dans la forme d'exécution précédente.

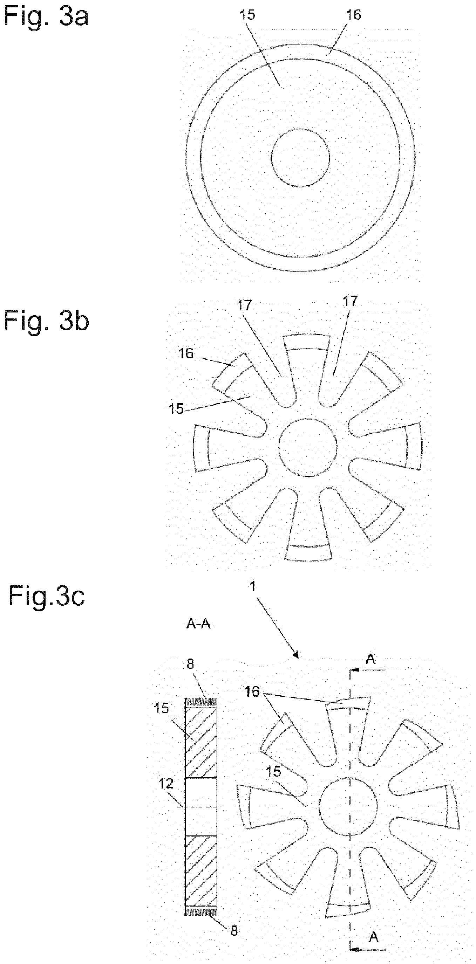

Une troisième forme d'exécution d'une fraise-mère 1 selon l'invention est représentée aux figures 3a-3c. La fraise-mère 1 selon cette forme d'exécution est fabriquée à partir d'une rondelle 15 en WC par exemple, ayant un axe central 12 et pourvue d'une couche 16 en matériau ultra-dur, de préférence en PCD ou CBN, sur sa surface cylindrique extérieure (Fig. 3a). La rondelle 15 peut avoir un diamètre extérieur compris entre 20 et 25 mm par exemple. La couche 16 peut être appliquée par CVD, PVD ou tout autre procédé approprié à ce genre de couches. La couche a une épaisseur qui est de préférence comprise entre 1 et 5 mm. Par des technologies existantes d'usinage de matériaux durs, telles que l'électroérosion au fil ou le découpage laser, des goujures 17 sont usinées à distance régulières (Fig. 3b) dans la surface extérieure de la rondelle 15 en passant à travers la couche ultra-dure 16. Ensuite, sur les portions de la surface extérieure de la rondelle 15 se trouvant entre deux goujures 17 adjacentes, l'usinage des arêtes 8 des profils de denture est effectué dans la couche ultra-dure 16 de la même manière que pour les formes d'exécution précédentes, résultant en l'outil représenté à la figure 3c.

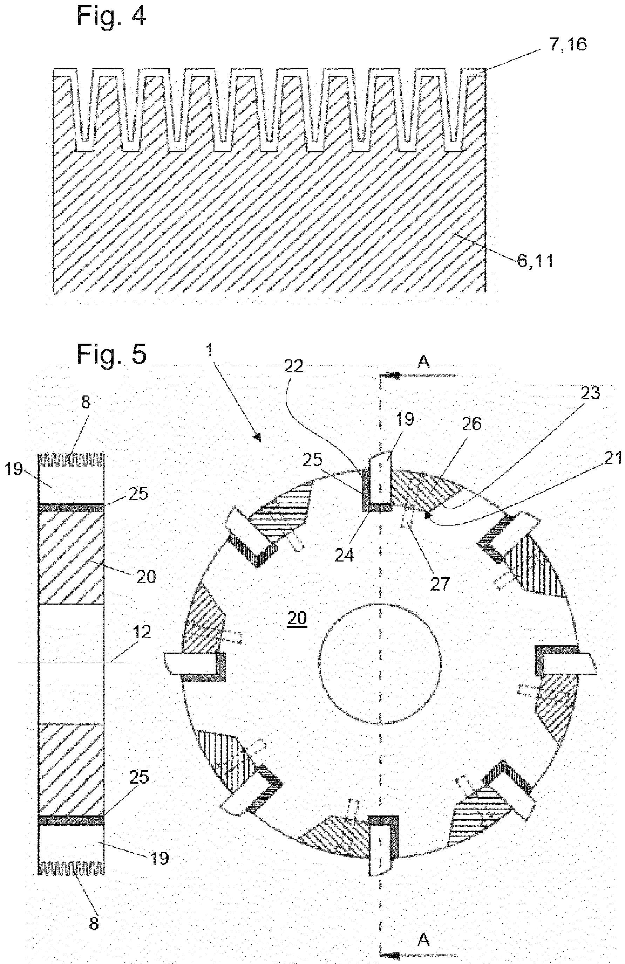

Dans les formes d'exécution des figures 1, 2 et 3, le profil de denture est préférablement usiné au moins dans et de préférence entièrement dans la partie ultra-dure 7 ou 16. Néanmoins, il n'est pas exclu de prévoir des profils comme illustré à la figure 4. Dans cette forme d'exécution, le profil de denture a été usiné dans la base 6 du bloc 5 ou dans la rondelle 11. La couche ultra-dure 7 ou 16 a été déposée après l'usinage des profils. L'opération de dépôt de la couche ultra-dure est ensuite de préférence suivie par un usinage additionnel de ladite couche ultra-dure. On notera que cette forme d'exécution est valable pour l'usage de roues dentées ayant des modules plus grands que ceux des roues dentées horlogères mentionnée plus haut et que la couche 7 aura de préférence plusieurs dixièmes de mm d'épaisseur pour que la fraise soit réaffûtable.

Une quatrième forme d'exécution d'une fraise-mère 1 selon l'invention est représentée à la figure 5. Contrairement aux formes précédentes, la fraise-mère comprend maintenant des profils de denture usinés dans des inserts 19 en diamant monocristallin. L'outil est fabriqué à partir d'une rondelle 20 qui représente le corps de la fraise-mère. La rondelle 20 est par exemple en WC ou acier, ayant un axe central 12 et pourvue d'encoches 21 réparties sur sa surface cylindrique extérieure. Les encoches 21 ont une première paroi latérale 22 destinée à recevoir l'insert diamant en appui contre ladite paroi 22, et une deuxième paroi 23 qui est inclinée par rapport à la première paroi 22 en direction opposée de ladite première paroi, les deux parois 22 et 23 étant essentiellement parallèles à l'axe central 12 de l'outil. De préférence, l'encoche 21 est pourvue d'une cavité 24 qui se trouve à la base de la première paroi 22. Avant de monter l'insert 19 (qui à cet instant n'est pas encore pourvu d'un profil tranchant), on applique un matériau de soudure 25 (par exemple à base d'argent) dans la cavité 24 et contre la première paroi 22. Ensuite, on monte l'insert 19 ainsi qu'une pièce de support 26 dont la forme correspond à la section de l'encoche définie par l'inclinaison des parois 22,23, tenant compte également de l'épaisseur de l'insert 19 et de la couche de matériau de soudure 25. La pièce de support 26 est vissée dans le matériau de la rondelle 20 par une ou plusieurs vis 27. Quand la vis 27 est serrée, la pièce de support 26 va effectuer une pression latérale sur l'insert grâce à l'inclinaison des parois 22,23. Ensuite, les arêtes 8 du profil de denture sont usinées dans les inserts 19. Les inserts 19 sont remplaçables par le dégagement des vis 27 et la rupture mécanique ou thermique du matériau de soudure 25.

Une forme équivalente à la forme d'exécution de la figure 5 ne comprend pas de matériau de soudure 25 pour fixer les inserts 19. Dans ce cas, les inserts 19 sont fixés entièrement via les pièces de support 26. Cette forme permet un remplacement plus aisé des inserts 19.

Le réaffûtage d'une fraise-mère selon l'invention s'effectue de la même manière que pour les fraises existantes. Comme mentionné, une fraise-mère selon l'invention est préférablement pourvue de profils à dépouille logarithmique, permettant le réaffûtage en conservant la forme originale de l'outil.

Il est clair pour l'homme du métier que des formes d'exécution équivalentes aux formes décrites ci-dessus sont inclues dans la portée des revendications annexées. Par exemple, une fraise-mère comprenant un corps 2 à section polygonale comme illustré à la figure 1 peut avoir des encoches 10 comme montrées à la figure 2, usinées dans les faces plates 9 de la surface extérieure. Lesdites encoches 10 vont alors recevoir les blocs 5 au lieu d'attacher les blocs sur lesdites faces plates 9.

L'utilisation de matériaux ultra-durs augmente de manière significative la durée de vie de la fraise-mère. De plus, des vitesses de coupe plus élevées sont applicables par rapport aux fraises existantes. La fréquence de réaffûtage est réduite de manière importante, résultant en une augmentation de la productivité. La durée de vie d'une fraise-mère selon l'invention est au moins trois fois supérieure à celle d'une fraise en WC. La productivité sera ainsi au moins doublée par rapport à l'utilisation de fraises en WC.

Les fraises-mère selon l'invention sont d'application pour le taillage de différents types de matériaux. Néanmoins, le PCD et le diamant monocristallin ne sont pas appropriés pour tailler des pièces en acier à cause de la chaleur générée localement dans la zone de contact, qui va entraîner une diffusion du carbone du profil en diamant dans la pièce usinée. Le CBN ne souffre pas de ce désavantage et sera donc utilisable pour tailler des pièces en acier. Le PCD et le diamant monocristallin ainsi que le CBN sont applicables pour usiner des pièces en CuBe₂, matériau qui est souvent utilisé pour la production de roues dentées horlogères.

## Revendications

1. Fraise-mère (1) pour le taillage de roues dentées de petites dimensions, telles que les roues dentées horlogères, la fraise-mère (1) étant apte à tourner autour d'un axe de rotation, la fraise-mère (1) comprenant une ou plusieurs rangées d'arêtes tranchantes (8), chaque rangée formant un profil de denture qui s'étend sur au moins une partie de l'épaisseur de la fraise-mère (1), **caractérisée en ce que** ledit profil de denture est fabriqué dans un matériau ultra-dur (7,16,19) choisi parmi le groupe constitué du diamant monocristallin, du diamant polycristallin (PCD) et du nitrure de bore cubique (CBN).

2. La fraise-mère (1) selon la revendication 1, **caractérisée en ce qu'**elle comprend un corps cylindrique (2, 11, 20) avec une surface extérieure et un axe central (12) qui correspond audit axe de rotation, ledit corps cylindrique (2, 11, 20) comprenant au moins un élément (5,19) tranchant attaché à la surface extérieure, ledit élément (5,19) étant pourvu desdites arêtes tranchantes (8) formant le profil de denture.

3. La fraise-mère (1) selon la revendication 2, **caractérisée en ce que** l'élément est un bloc (5) comprenant une base (6) surmontée d'une couche ultra-dure (7) en PCD ou en CBN, le profil de denture se trouvant au moins et de préférence entièrement dans la couche ultra-dure (7).

4. La fraise-mère (1) selon la revendication 3, **caractérisée en ce que** le corps cylindrique (2) a la forme d'un cylindre à section polygonale comprenant sur sa surface extérieure une pluralité de faces (9), le nombre de faces correspondant au nombre de blocs (5), lesdits blocs (5) étant attachés aux faces (9) respectives.

5. La fraise-mère (1) selon la revendication 3 ou 4, **caractérisée en ce que** le corps cylindrique (2,11) est pourvu d'au moins une encoche (10) sur sa surface extérieure, le nombre d'encoches (10) correspondant au nombre de blocs (5), lesdits blocs (5) étant fixés dans les encoches (10) respectives.

6. La fraise-mère (1) selon l'une quelconque des revendications 3 à 5, **caractérisée en ce que** la base (6) du bloc (5) est attachée au corps (2,11) de la fraise-mère (1) par brasage.

7. La fraise-mère (1) selon l'une quelconque des revendications 3 à 6, **caractérisée en ce que** le corps cylindrique (2) ainsi que la base (6) du bloc (5) sont constitués de carbure de tungstène (WC).

8. La fraise-mère (1) selon la revendication 2, **caractérisée en ce que** l'élément est un insert (19) en diamant monocristallin.

9. La fraise-mère (1) selon la revendication 8, **caractérisée en ce que** le corps cylindrique (20) de la fraise-mère (1) est pourvu d'au moins une encoche (21) dans la surface extérieure du corps (20), l'encoche (21) comprenant une première et une deuxième parois latérales (22,23), ledit insert (19) étant serré entre la première paroi latérale (22) et une pièce de support (26) introduite dans l'encoche (21) et vissée dans le corps cylindrique (20) de la fraise-mère (1).

10. La fraise-mère (1) selon la revendication 9, **caractérisée en ce que** l'insert (19) est en outre attaché à la première paroi latérale (22) par un matériau de soudure (25).

11. La fraise-mère (1) selon l'une quelconque des revendications 9 ou 10, **caractérisée en ce que** la deuxième paroi latérale (23) est inclinée dans une direction opposée par rapport à la première paroi latérale (22).

12. La fraise-mère (1) selon la revendication 1, **caractérisée en ce que** la fraise-mère (1) est formée à partir d'une rondelle (15) pourvue d'une couche ultra-dure (16) en PCD ou en CBN sur sa surface courbée extérieure, plusieurs goujures (17) longitudinales étant usinées dans la rondelle (15) avec lesdites goujures (17) passant à travers la couche ultra-dure (16), le profil de denture étant formé au moins et de préférence entièrement dans la portion de la couche ultra-dure (16) qui se trouve entre deux goujures adjacentes (17).
